# EUROPÄISCHE PATENTSCHRIFT

(11) **EP 0 883 434 B1**
(45) Veröffentlichungstag und Bekanntmachung des Hinweises auf die Patenterteilung: **14.05.2003**
(21) Anmeldenummer: 97903368.5
(22) Anmeldetag: 24.02.1997
(51) Int. Cl.: B01D 53/94, B01J 21/06

(54) **VERFAHREN ZUR ABGASREINIGUNG**
METHOD FOR PURIFYING EXHAUST GASES
PROCEDE POUR PURIFIER DES GAZ D'ECHAPPEMENT

(30) Priorität: 01.03.1996 DE 19607862
(43) Veröffentlichungstag der Anmeldung: 16.12.1998
(73) Patentinhaber: Volkswagen Aktiengesellschaft, 38436 Wolfsburg (DE)
(72) Erfinder: ENGELER, Werner, D-38527 Meine (DE); NEYER, Dieter, D-38444 Wolfsburg (DE); KÖSTERS, Martina, D-30161 Hannover (DE); HESSE, Diethard, D-30453 Hannover (DE)
(86) Internationale Anmeldenummer: EP9700881
(87) Internationale Veröffentlichungsnummer: WO97031705

(56) Entgegenhaltungen:
- WO-A-91/04094
- WO-A-91/09823
- DE-A- 3 642 472
- DE-A- 4 110 227
- DE-A- 4 240 558
- DE-A- 4 320 218
- US-A- 4 980 040

## Beschreibung

Die Erfindung betrifft ein Verfahren zur katalytischen Umsetzung von Stickoxiden gemäß dem Oberbegriff des Anspruchs 1.

Zur Minderung von CO, HC und/oder NOx aus Abgasen von Brennkraftmaschinen kommen bislang hauptsächlich edelmetallbeschichtete Katalysatoren zum Einsatz. Als katalytisch aktive Schicht ist Platin anderen Metallen überlegen, da Platin gegenüber CO und HC bereits bei niedrigen Temperaturen (ab ca. 140 °C) katalytisch aktiv ist. Die katalytische Wirkung des Platins ist über lange Zeit stabil und wird auch bei hohen Abgastemperaturen nicht wesentlich durch Migration des Platins beeinträchtigt. Die primäre Wirkung des Pt-Katalysators, z. B. Pt/Al₂O₃ liegt in der Oxidation von CO und HC zu CO₂ bei gleichzeitiger NOx-Reduktion. Die katalytische Reduktion von NOx ist je nach verwendetem Katalysator verhältnismäßig stark temperaturabhängig und kann ihr Maximum unterhalb 200 °C haben.

Aus der DE 36 42 018 A ist ein Katalysator auf Zeolithbasis bekannt, der die Umsetzung von Stickoxiden mit Kohlenwasserstoffen katalysiert. Die Umsetzung der Stickoxide ist abhängig von der Konzentration an Kohlenwasserstoffen in dem zu behandelnden Abgas, wobei bei einem Verhältnis NOx : HC = 1 eine knapp 50-%ige Reduktion der Stickoxide erfolgt. Ein solcher Zeolithkatalysator läßt sich auch mit den üblichen Edelmetallkatalysatoren (Oxidationskatalysatoren) verbinden.

Problematisch ist bei diesen, insbesondere den thermischen Katalysatoren, daß NOx teils auch zu dem ozonschädigenden Treibhausgas N₂O umgesetzt werden kann.

Eine Erhöhung des NOx-Umsatzes, jedoch keine Vermeidung der N₂O-Bildung läßt sich durch selektive katalytische Reduktion (SCR-Verfahren) mit Ammoniak oder Harnstoff als Reduktionsmittel erreichen. Das SCR-Verfahren eignet sich für den instationären Betrieb nur bedingt, da aufgrund der wechselnden Betriebszustände der Brennkraftmaschine beim Einstellen einer 100-%igen NOx-Reduktionsmittel-Stöchiometrie die Gefahr eines NH₃-Schlupfes besteht. Hinzu kommt, daß beim instationären Betrieb neben dem Kraftstoff auch Ammoniak oder Harnstoff mitgeführt werden muß.

Bei Abgastemperaturen unter 140 °C sind die oben beschriebenen Katalysatoren praktisch inaktiv. Um die Abgasreinigung auch während des Aufheizvorganges zu gewährleisten, wird die Adsorption der Schadstoffkomponenten (beispielsweise an einem Zeolithen) vorgeschlagen. Die adsorbierte Schadstoffgaskomponente aus dem Abgas, wie z. B. NOx, wird bei Abgastemperaturen von ca. 200 °C von der Zeolithoberfläche desorbiert und durch den nachgeschalteten, bei dieser Temperatur aktiven Edelmetallkatalysator umgesetzt. Das Problem ist hier die notwendige Regenerierung der Zeolithoberfläche, die für eine Langzeitstabilität gewährleistet sein muß. Insbesondere mögliche Oberflächenvergiftungen stellen ein Problem für diese Art der Abgasreinigung dar.

US 4,980,040 beschreibt eine Vorrichtung und ein Verfahren zur photokatalytischen Umsetzung von Stickoxiden in umweltverträgliche Verbindungen. Dabei werden Stickoxide in molekularen Stickstoff und molekularen Sauerstoff zersetzt, indem die Stickoxide über einen metallischen Katalysator bei einer erhöhten Temperatur bei gleichzeitiger Bestrahlung mit Licht geeigneter Wellenlänge geleitet wird. Auf diese Weise ist beispielsweise eine Reinigung der Abgase von Ottomotoren mit Lambda-geregeltem Katalysator möglich. Nachteilig ist allerdings die hohe Anspringtemperatur des Katalysators, die für die katalytische Umsetzung benötigt wird.

Aufgabe der vorliegenden Erfindung ist es, eine katalytische Umsetzung von Stickoxiden im Abgas einer mit wechselnden Betriebszuständen instationär betriebenen Dieselbrennkraftmaschine oder Magermix(Otto)-Motor bereits bei niedrigen Temperaturen zu erreichen.

Diese Aufgabe wird bei dem eingangs beschriebenen Verfahren gelöst mit den kennzeichnenden Maßnahmen des Anspruchs 1, sowie der Verwendung des erfindungsgemäßen Verfahrens nach den Ansprüchen 15 und 19. Die Unteransprüche zeigen bevorzugte Ausgestaltungen.

Mit der Erfindung wird eine Verringerung der Konzentration mindestens einer der Komponenten Nox, HC, CO im Abgas einer mit wechselnden Betriebszuständen instationär betriebenen Dieselbrennkraftmaschine oder Magermix(Otto)-Motor erreicht, wobei die zu verringernden Abgaskomponenten an einem in dem Abgasstrom angeordneten Katalysator umgesetzt werden. Die Umsetzung erfolgt insbesondere zu den Komponenten N₂, CO₂ und H₂O, wobei die Umsetzung in Gegenwart von Sauerstoff abläuft. Im Unterschied zur thermischen Katalyse wird bei der vorliegenden Erfindung die Photokatalyse eingesetzt, wobei als Katalysator Halbleiter, insbesondere Photohalbleiter zum Einsatz kommen. Die Photoaktivität des Halbleiters gegenüber den Abgaskomponenten wird vorzugsweise erreicht durch Anregung mit einem Licht der Wellenlänge λ ≤ 600 nm und insbesondere ≤ 410 nm, wobei die Wellenlänge λ vom verwendeten Photohalbleiter abhängig ist. Als Katalysator (katalytisch aktive Substanz) eignen sich für die Erfindung insbesondere Oxide der Übergangsmetalle und/oder der seltenen Erden aber auch beispielsweise Sb₂O₄. Die Metalloxide können in Mischverbindungen vorliegen, beispielsweise als Titanat. insbesondere geeignet sind TiO₂, ZnO, SrTiO₃, ZrO₂, Sb₂O_{4,} CeO₂. Der Halbleiter kann auch dotiert sein, beispielsweise mit Metallen der VIII-Hauptgruppe, z. B. Pt, Rh und/oder Ru. Hierdurch wird insbesondere die Oxidationseigenschaft des Katalysators verbessert.

Die Umsetzung erfolgt in Gegenwart mindestens 1 Vol.-% O₂, wobei ein zeitweiliges Fehlen von Sauerstoff nicht schädlich ist, jedoch zu einer deutlich schlechteren NOx-Umsetzung führt. Die Umsetzung erfolgt also insbesondere in den Abgasen von Dieselbrennkraftmaschinen oder Magermix(Otto)-Motoren. Die Erfindung eignet sich insbesondere beim Einsatz instationärer Brennkraftmaschinen, d. h. bei Brennkraftmaschinen mit stark wechselnden Betriebszuständen wie Drehzahl und Last. Neben NOx wird erfindungsgemäß auch HC und/oder CO umgesetzt, wobei diese Komponenten die NOx-Umsetzung verstärken. Die erfindungsgemäße photokatalytische Abgasumsetzung kann mit den üblichen bekannten (thermischen) Katalysatoren kombiniert werden, wobei je nach Einsatzzweck die bekannten Katalysatoren vor und nachgeschaltet werden können. Bei Dieselbrennkraftmaschinen wird in einer besonders bevorzugten Ausführungsform der photokatalytischen Abgasreinigung ein Oxidationskatalysator, insbesondere auf Edelmetallbasis, beispielsweise mit Platin, und/oder ein Partikelfilter vorgeschaltet, wobei der Einsatz des Oxidationskatalysators besonders ökonomisch ist. Hierdurch wird erreicht, daß der Abgasstrom vor der Photokatalyse von klebrigen Rußpartikeln befreit wird, so daß die Bestrahlung des Photokatalysators nicht durch Rußpartikel übermäßig beeinträchtigt wird. Es hat sich gezeigt, daß mit Oxidationskatalysatoren bereits ein solcher Abbau, der den Rußpartikelchen anhaftenden Kohlenwasserstoffen erfolgt, so daß die Partikel feiner und weniger klebrig sind, so daß der Lichtaustritt der Strahlungsquelle vom Ruß nicht mehr zugesetzt werden kann.

Der Abgasstrom kann auf unterschiedliche Weise über den Photokatalysator geführt werden. Eine mögliche Variante ist es, den Abgasstrom durch ein Pulver durchzuleiten, das den Photokatalysator enthält, wobei das Pulver durch den Abgasstrom in einer Wirbelschicht gehalten wird. Die Belichtung kann hierbei von außen und/oder innerhalb der Wirbelschicht erfolgen. Diese Art der katalytischen Umsetzung eignet sich insbesondere für den stationären Betrieb von Brennkraftmaschinen.

Eine weitere Möglichkeit der Kontaktierung des Abgasstroms mit dem Photohalbleiter ist es, den Photohalbleiter als poröses Festbett (offenporig) vorzulegen, durch das der Abgasstrom geleitet wird. Die Belichtung kann auch hier wiederum von außen oder innen erfolgen.

In einer besonders bevorzugten Ausführungsform liegt der Photokatalysator als Schicht vor, über die der Abgasstrom streicht und die durch den Abgasstrom hindurch belichtet wird. Vorzugsweise ist der Photokatalysator hierbei auf eine Trägerstruktur aufgetragen. Außerdem liegt der Photokatalysator hier vorteilhaft möglichst großflächig vor. Bei dieser Ausführungsform kann die Belichtung sowohl quer zum Abgasstrom, in dessen Richtung und/oder auch entgegen dessen Richtung erfoigen, wobei die letzteren Varianten bei einer röhrenförmigen Struktur zum Einsatz kommen. In einer altemativen Ausgestaltung liegt der Photokatalysator plattenförmig auf Abstand geschichtet vor, so daß zwischen den Platten der Abgasstrom hindurchgeführt wird. Hierbei kann quer und/oder auch längs zum Abgasstrom belichtet werden.

Die Erfindung wird im folgenden anhand von Zeichnungen näher dargestellt.

Es zeigen:
- Figur 1: eine Wirbelschichtabgasreinigung;
- Figur 2: eine Reinigung mittels eines Plattensystems;
- Figur 3: das Plattensystem aus Figur 2 im Schnitt quer zur Strömung; und
- Figur 4: eine graphische Darstellung der Abgasumsetzung.

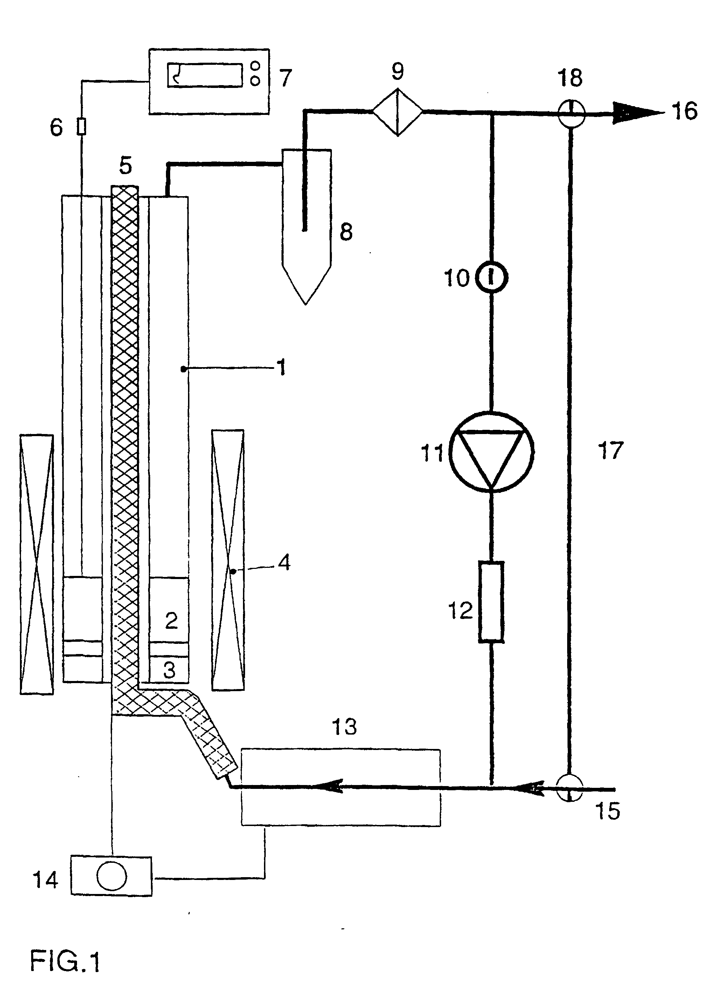

Der in Figur 1 dargestellte Ringspaltwirbelschichtreaktor 1 eignet sich zur NOx-Umsetzung (Abgasbehandlung, Entgiftung) für stationär betriebene Brennkraftmaschinen bzw. auch, als Kleinanlage, zum Untersuchen und Screenen der Photoaktivität von Halbleitem (des Katalysators) gegenüber NOx, HC und CO. Das Screenen erfolgt üblicherweise, wie nachstehend beschrieben, mit einem synthetischen Abgas, das anstelle der Abgase einer Brennkraftmaschine zum Einsatz kommt

Um einen Ringspaltwirbelschichtreaktor 1, der aus temperaturbeständigem, UV-Licht durchlässigen Glas gebildet ist, sind mit einem Reflektionsmantel sechs UV-Leuchtstofflampen in Form eines Lampenmantels 4 angeordnet. In das Innere des Ringspaltwirbelschichtreaktors 1 ist ein Heizband 5 eingesetzt, das dazu dient, das durch den Ringspaltwirbelschichtreaktor durchgeleitete Gas auf der gewünschten Temperatur zu halten. Der Ringspalt des Ringspaltwirbelschichtreaktors 1 ist nach unten durch einen gasdurchlässigen Anströmboden 3 abgeschlossen, über dem 1 g Titandioxid als Katalysatormaterial 2 (Halbleiter) liegt. Das Titandioxid ist für photokatalytische Reaktionen geeignet und hat eine hohe BET-Oberfläche von etwa 300 m²/g. (Bei den erfindungsgemäß eingesetzten Photokatalysatoren sind grundsätzlich Oberflächen ab 50 m²/g geeignet.) Das Titandioxidmaterial 2 liegt als agglomeriertes Pulver vor.

Das Reaktionsgas wird über eine Zuleitung 15 durch einen Ofen 13 durch den Anströmboden 3 in den Ringspalt des Ringspaltwirbeischichtreaktors 1 geführt. Durch kontinuierliche Rückführung eines Teils des umgesetzten Gasstroms zum Frischgas über einen Zweiwegehahn 10 wird die Gasstromgeschwindigkeit in dem Ringspalt des Ringspaltwirbelschichtreaktors 1 derart erhöht, daß sich die gewünschte Wirbelschichthöhe aus dem Wirbelschichtmaterial 2 einstellt (homogene Wirbelschicht). Hierzu wird der rückgeführte Gasstrom über eine Membranpumpe 11 und einen Strömungsmesser 12 geführt. Die Ableitung des umgesetzten Gases führt über einen Zyklon 8 zur Abscheidung eventuell ausgetragener Katalysatorpartikel und anschließend über einen Filter 9. Nach dem Filter 9 wird über einen Dreiwegehahn 18 das Gasgemisch ausgeschleust 16, um es einem Quadrupolmassenspektrometer und einem FTIR-Spektrometer zuzuführen.

Das Titandioxid liegt überwiegend in der Anatasmodifikation vor und besitzt eine Bandlücke von 3,06 eV bis 3,23 eV. Damit liegt die Absorptionskante im UV-A-Bereich. Das verwendete Reaktionsgas wurde auf einen Volumenstrom von 500 ml/min eingestellt und hat folgende Zusammensetzung:
300 ppm NO
300 ppm Propen
6 Vol.-% Sauerstoff
Rest Stickstoff.

Der Meßvorgang wird in fünf Schritten durchgeführt:
1. Einstellen eines konstanten Volumenstroms und Meßwerterfassung der Gaszusammensetzung über den Bypaß 17.
2. Umschalten der Dreiwegehähne und Durchleiten des Gasstroms über den Reaktor, der zuvor mit Stickstoff gespült wurde.
3. Nach Einstellung eines stationären Zustandes der Gaskonzentration an der Meßwertaufnahme Belichten des Reaktors über 15 Stunden mit UV-Strahlung.
4. Ausschalten der Lampen.
5. Nach Einstellung der stationären Gaskonzentration an der Meßwertaufnahme Umleiten des Gasstroms über den Bypaß 17.

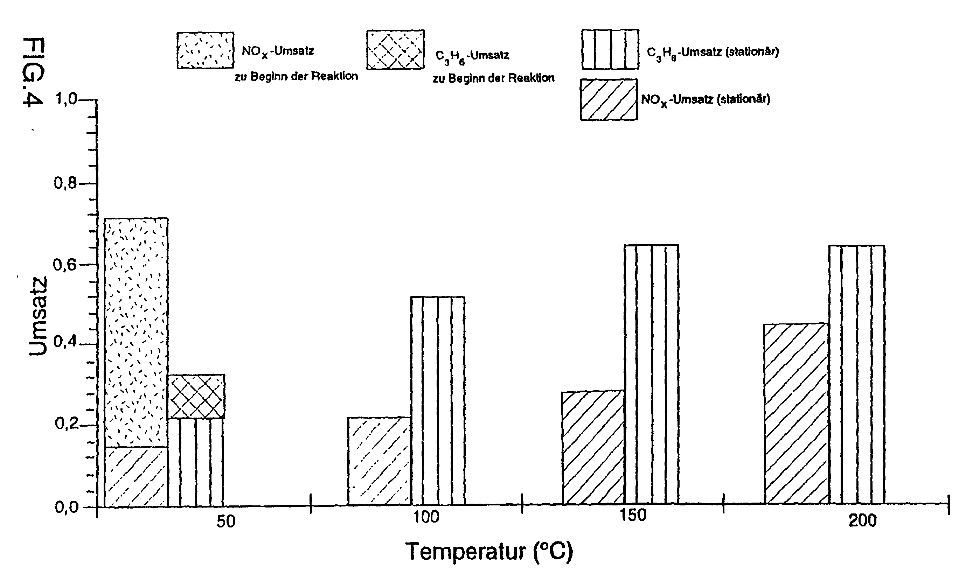

Der Meßvorgang wurde mit demselben Katalysatormaterial bei unterschiedlichen Temperaturen des Synthesegases 50 °C, 100 °C, 50 °C, 100 °C 150 °C und 200 °C wiederholt. Die Ergebnisse sind in Figur 4 dargestellt. Nach diesen Untersuchungen findet eine stationäre Konvertierung von NOx und Propen in der Belichtungsphase statt und steigt mit zunehmender Temperatur des Synthesegases linear von 15 % NOx und 22 % Propen auf 38 % NOx und 81 % Propen an. NOx wird dabei fast ausschließlich zu N₂ und O₂ reduziert, und 80 % des umgesetzten Propens werden zu CO₂ oxidiert. Zu Beginn der Belichtungsphase erreicht die Umsetzung von NOx bereits bei 50 °C einen Maximalwert von 76 %, bei 32 % Propen; hierin liegt das Potential der photokatalytischen Umsetzung.

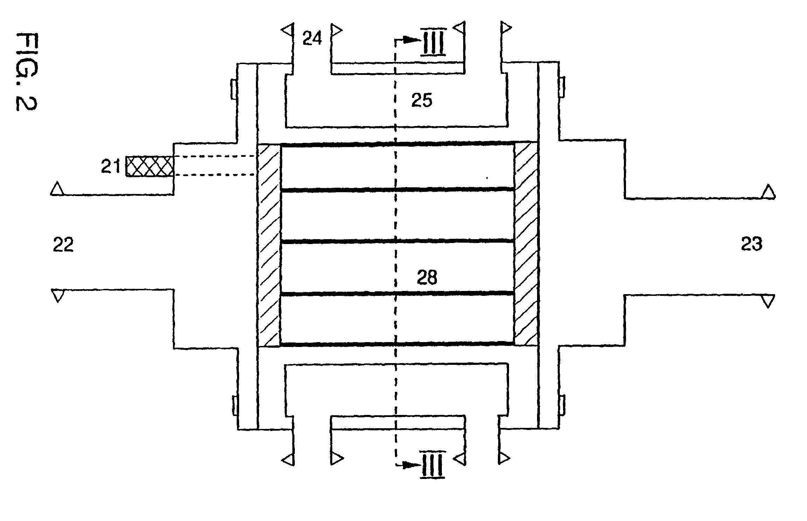

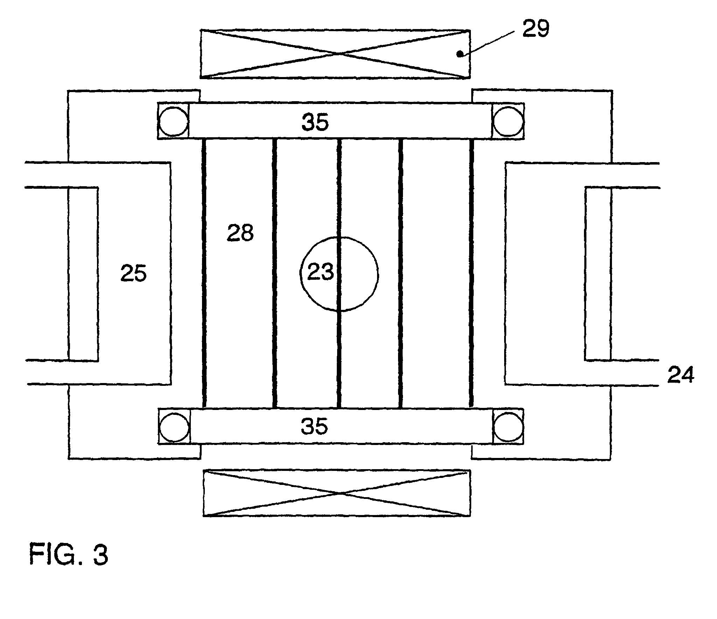

Um die Photokatalyse unter den instationären Bedingungen des Abgases eines Otto- oder Dieselmotors benutzen zu können, wird der Halbleiter immobilisiert. Der in Figur 2 und 3 dargestellte Katalysator hat einen plattenförmigen Aufbau mit Trägerplatten 28, die mit dem Katalysatormaterial (Titandioxid) beschichtet sind. Der Abstand der Platten 28 ist dabei so festgelegt, daß eine möglichst große Oberfläche optimal mit UV-Licht bestrahlt wird. Das UV-Ucht kommt von Refiektoriampen 29, die - wie in Figur 3 dargestellt - ober- und unterhalb der Platten 28 angeordnet sind, und trifft durch Quarzglasplatten 35 quer zur Gasströmung auf die Platten 28. Das Abgas, das von einer (nicht dargestellte) Brennkraftmaschine stammt, strömt durch eine (im wesentlichen nicht dargestellte) Abgasanlage zu dem Einlaß 22, entlang den Platten 28 und zu dem Auslaß 23. Von dort strömt das Abgas weiter in der Abgasanlage, insbesondere zu einer Schalldämpfereinrichtung. Zur Kontrolle der Katalysatortemperatur ist ein Thermoelement 21 vorgesehen. Für die Temperierung ist das Katalysatorgehäuse mit Hohiräumen 25 versehen, die über Ein- und Auslässe 24 mit Temperierfluid beaufschlagt werden können, so daß über eine Temperierung des (gesamten) Gehäuses eine gewisse Temperierung des Katalysators erreicht wird.

Die Erfindung eignet sich insbesondere für instationäre Diesel- und Magermix(Otto)-Motoren in Kraftfahrzeugen.

## Patentansprüche

1. Verfahren zur katalytischen Umsetzung von in einem Abgas enthaltenem NOx (Stickoxide), HC (Kohlenwasserstoffe) und/oder CO im Abgassystem einer mit wechselnden Betriebszuständen instationär betriebenen Dieselbrennkraftmaschine oder Magermix(Otto)-Motor, wobei die Abgaskomponenten zusammen mit O₂ einem Katalysator zugeführt werden, der während der Umsetzung belichtet wird, **dadurch gekennzeichnet, daß** der Sauerstoff zu mindestens 1 Vol.-% im Abgasstrom enthalten ist.

2. Verfahren nach Anspruch 1, **dadurch gekennzeichnet, daß** der Katalysator ein Halbleiter ist.

3. Verfahren nach Anspruch 2, **dadurch gekennzeichnet, daß** der Halbleiter ein Photohalbleiter ist.

4. Verfahren nach einem der Ansprüche 2 bis 3, **dadurch gekennzeichnet, daß** als Halbleiter Oxide der Übergangsmetalle und/oder seltene Erden eingesetzt werden.

5. Verfahren nach einem der Ansprüche 2 bis 4, **dadurch gekennzeichnet, daß** als Halbleiter ZNO, TiO₂, SrTiO₃, ZrO₂, Sb₂O₄ und/oder CeO₂ eingesetzt werden.

6. Verfahren nach einem der Ansprüche 2 bis 5, **dadurch gekennzeichnet, daß** der Halbleiter mit einem Übergangsmetall und/oder einem Übergangsmetalloxid dotiert oder beladen ist.

7. Verfahren nach Anspruch 6, **dadurch gekennzeichnet, daß** ein Übergangsmetall der VIII-Hauptgruppe verwendet wird.

8. Verfahren nach einem der vorangegangenen Ansprüche, **dadurch gekennzeichnet, daß** mit einer Wellenlänge λ ≤ 600 nm, insbesondere λ ≤ 410 nm belichtet wird.

9. Verfahren nach einem der vorangegangenen Ansprüche, **dadurch gekennzeichnet, daß** neben NOx und Sauerstoff auch HC und/oder CO im Abgas enthalten ist.

10. Verfahren nach einem der vorangegangenen Ansprüche, **dadurch gekennzeichnet, daß** dem belichteten Katalysator ein Oxidationskatalysator, insbesondere auf Edelmetallbasis, und/oder ein Partikelfilter vorgeschaltet ist.

11. Verfahren nach einem der vorangegangenen Ansprüche, **dadurch gekennzeichnet, daß** der Katalysator eine Trägerstruktur aufweist, und daß auf dieser eine für die katalytische Umsetzung wirksame Beschichtung aufgebracht ist.

12. Verfahren nach Anspruch 11, **dadurch gekennzeichnet, daß** die Beschichtung flächig aufgebracht ist.

13. Verfahren nach Anspruch 11 oder 12, **dadurch gekennzeichnet, daß** das Abgas über die Beschichtung geführt wird.

14. Verfahren nach Anspruch 13, **dadurch gekennzeichnet, daß** die Belichtung quer, in Richtung und/oder entgegen der Richtung des Abgasstroms erfolgt.

15. Verwendung des Verfahrens nach einem der vorangegangenen Ansprüche in einer Katalysatorvorrichtung mit einer auf einem Träger (28) aufgebrachten photokatalytischen Schicht und mindestens einer Lichtquelle (29) zum Belichten der photokatalytischen Schicht.

16. Verwendung nach Anspruch 15, **dadurch gekennzeichnet, daß** die photokatalytische Schicht auf parallel zueinander angeordneten Trägem (28) aufgebracht ist.

17. Verwendung nach Anspruch 16, **dadurch gekennzeichnet, daß** die Träger (28) plattenförmig sind.

18. Verwendung nach Anspruch 17, **dadurch gekennzeichnet, daß** die mindestens eine Lichtquelle (29) die katalytischen Schichten der Trägerplatten (28) quer zur Abgasstromrichtung belichtet.

19. Verwendung des Verfahrens nach einem der Ansprüche 1 bis 14 in einer mit wechselnden Betriebszuständen instationär betriebenen Dieselbrennkraftmaschine oder Magermix(Otto)-Motor mit einem eine Katalysatorvorrichtung aufweisenden Abgassystem.

## Claims

1. Method for the catalytic conversion of NOx (nitrogen oxide), HC (hydrocarbons) and/or CO which are present in an exhaust gas in the exhaust system of a lean-mix (spark-ignition) engine or diesel internal combustion engine which is operated with fluctuating operating conditions (non-steady-state conditions), the exhaust-gas components, together with O₂, being fed to a catalytic converter, which is exposed during the conversion, **characterized in that** the exhaust-gas stream contains at least 1% by volume of oxygen.

2. Method according to Claim 1, **characterized in that** the catalytic converter is a semiconductor.

3. Method according to Claim 2, **characterized in that** the semiconductor is a photosemiconductor.

4. Method according to one of Claims 2 to 3, **characterized in that** the semiconductor used is oxides of the transition metals and/or rare earths.

5. Method according to one of Claims 2 to 4, **characterized in that** the semiconductor used is ZnO, TiO₂, SrTiO₃, ZrO₂, Sb₂O₄ and/or CeO₂.

6. Method according to one of Claims 2 to 5, **characterized in that** the semiconductor is doped or loaded with a transition metal and/or a transition metal oxide.

7. Method according to Claim 6, **characterized in that** a transition metal from main group VIII is used.

8. Method according to one of the preceding claims, **characterized in that** exposure is carried out at a wavelength λ ≤ 600 nm, in particular λ ≤ 410 nm.

9. Method according to one of the preceding claims, **characterized in that** HC and/or CO are present in the exhaust gas in addition to NOx and oxygen.

10. Method according to one of the preceding claims, **characterized in that** an oxidation catalytic converter, in particular based on precious metal, and/or a particle filter is connected upstream of the exposed catalytic converter.

11. Method according to one of the preceding claims, **characterized in that** the catalytic converter has a support structure, and **in that** a coating which is active in the catalytic conversion is applied to the support structure.

12. Method according to Claim 11, **characterized in that** the coating is applied areally.

13. Method according to Claim 11 or 12, **characterized in that** the exhaust gas is passed over the coating.

14. Method according to Claim 13, **characterized in that** the exposure takes place transversely, in the direction of and/or opposite to the direction of the exhaust-gas stream.

15. Use of the method according to one of the preceding claims in a catalytic converter device having a photocatalytic layer applied to a support (28) and at least one light source (29) for exposure of the photocatalytic layer.

16. Use according to Claim 15, **characterized in that** the photocatalytic layer is applied to supports (28) arranged parallel to one another.

17. Use according to Claim 16, **characterized in that** the supports (28) are in plate form.

18. Use according to Claim 17, **characterized in that** the at least one light source (29) exposes the catalytic layers of the support plates (28) transversely with respect to the direction of flow of the exhaust gas.

19. Use of the method according to one of Claims 1 to 14 in a lean-mix (spark-ignition) engine or diesel internal combustion engine which is operated with fluctuating operating states (non-steady-state conditions) and has an exhaust system which includes a catalytic converter device.

## Revendications

1. Procédé de conversion catalytique de NOx (oxydes d'azote), de HC (hydrocarbures) et/ou de CO contenus dans des gaz d'échappement du système d'échappement d'un moteur diesel ou d'un moteur (à allumage par étincelle) à mélange pauvre entraîné de manière non stationnaire avec des états de fonctionnement changeants, les composants des gaz d'échappement étant acheminés conjointement avec de l'O₂ à un catalyseur qui est irradié pendant la conversion, **caractérisé en ce que** l'oxygène est présent à raison d'au moins 1 % en volume dans le courant de gaz d'échappement.

2. Procédé selon la revendication 1, **caractérisé en ce que** le catalyseur est un semi-conducteur.

3. Procédé selon la revendication 2, **caractérisé en ce que** le semi-conducteur est un semi-conducteur photoélectrique.

4. Procédé selon l'une quelconque des revendications 2 à 3, **caractérisé en ce que** l'on utilise en tant que semi-conducteurs des oxydes des métaux de transition et/ou des terres rares.

5. Procédé selon l'une quelconque des revendications 2 à 4, **caractérisé en ce que** l'on utilise en tant que semi-conducteurs du ZO, TiO₂, SrTiO₃, ZrO₂, Sb₂O₄ et/ou du CeO₂.

6. Procédé selon l'une quelconque des revendications 2 à 5, **caractérisé en ce que** le semi-conducteur est dopé ou chargé d'un métal de transition et/ou d'un oxyde de métal de transition.

7. Procédé selon la revendication 6, **caractérisé en ce que** l'on utilise un métal de transition du groupe principal VIII.

8. Procédé selon l'une quelconque des revendications précédentes, **caractérisé en ce que** l'on effectue l'irradiation avec une longueur d'onde λ ≤ 600 nm, en particulier λ ≤ 410 nm.

9. Procédé selon l'une quelconque des revendications précédentes, **caractérisé en ce qu'**en plus du NOx et de l'oxygène, les gaz d'échappement contiennent aussi des HC et/ou du CO.

10. Procédé selon l'une quelconque des revendications précédentes, **caractérisé en ce que** l'on dispose avant le catalyseur irradié un catalyseur d'oxydation, en particulier à base de métal précieux, et/ou un filtre à particules.

11. Procédé selon l'une quelconque des revendications précédentes, **caractérisé en ce que** le catalyseur présente une structure de support et **en ce que** l'on applique sur celle-ci un revêtement efficace pour la conversion catalytique.

12. Procédé selon la revendication 11, **caractérisé en ce que** le revêtement est appliqué en surface.

13. Procédé selon la revendication 11 ou 12, **caractérisé en ce que** les gaz d'échappement sont guidés par-dessus le revêtement.

14. Procédé selon la revendication 13, **caractérisé en ce que** l'irradiation s'effectue transversalement au courant de gaz d'échappement, dans sa direction et/ou dans la direction opposée à celui-ci.

15. Utilisation du procédé selon l'une quelconque des revendications précédentes dans un dispositif de catalyseur comprenant une couche photocatalytique appliquée sur un support (28) et au moins une source de lumière (29) pour irradier la couche photocatalytique.

16. Utilisation selon la revendication 15, **caractérisée en ce que** la couche photocatalytique est appliquée sur des supports (28) disposés parallèlement les uns aux autres.

17. Utilisation selon la revendication 16, **caractérisée en ce que** les supports (28) sont en forme de plaques.

18. Utilisation selon la revendication 17, **caractérisée en ce que** l'au moins une source de lumière (29) irradie les couches catalytiques des plaques de support (28) transversalement à la direction d'écoulement des gaz d'échappement.

19. Utilisation du procédé selon l'une quelconque des revendications 1 à 14 dans un moteur diesel ou un moteur (à allumage par étincelle) à mélange pauvre entraîné de manière non stationnaire avec des états de fonctionnement changeants, comprenant un système d'échappement présentant un dispositif de catalyseur.
